# EUROPEAN PATENT SPECIFICATION

(11) **EP 1 728 749 B1**
(45) Date of publication and mention of the grant of the patent: **26.05.2010**
(21) Application number: 06011272.9
(22) Date of filing: 31.05.2006
(51) Int. Cl.: B65H 54/28, H02K 33/18

(54) **Traverse device for yarn, and textile machinery including the same**
Fadentraversiervorrichtung und Textilmaschine mit dergleichen
Dispositif de va-et-vient de fil et machine textile comprenant celui-ci

(30) Priority: 31.05.2005 JP 2005158821
(43) Date of publication of application: 06.12.2006
(73) Proprietor: MURATA KIKAI KABUSHIKI KAISHA, Minami-ku Kyoto-shi Kyoto 601-8326 (JP)
(72) Inventor: Kino, Yoshihiro, Uji-shi Kyoto 611-0002 (JP); Masai, Tetsuji, Kusatsu-shi Shiga 525-0045 (JP)
(74) Representative: Müller-Boré & Partner Patentanwälte

(56) References cited:
- EP-A1- 0 668 653
- DE-A1- 19 858 548
- JP-A- 61 121 763
- JP-A- 61 142 955
- US-A- 5 113 099
- US-A- 5 424 591
- US-A- 5 698 911
- ANONYMOUS: "Balanced and coupled dual voice coil motor design" RESEARCH DISCLOSURE, MASON PUBLICATIONS, HAMPSHIRE, GB, vol. 308, no. 92, December 1989 (1989-12), XP007114550 ISSN: 0374-4353

## Description

The present invention relates to a yarn traverse device for traversing a yarn to be wound by a takeup bobbin. In addition, the present invention relates to textile machinery including such a traverse device.

Regarding such a type of traverse device, Japanese Published Unexamined Patent Application No. 2001-72334 (Document 1) discloses a configuration in which a yarn guide for guiding a yarn is attached to the tip end side of an arm, the other end side or an intermediate portion of the arm is connected to a shaft, an arm can oscillate around the shaft as a pivot, and a voice coil motor is connected to the other end side of the arm. In this document 1, the voice coil motor includes a stator comprising a fan-shaped permanent magnet extended around the shaft, and a movable member comprising a fan-shaped air-core coil provided so as to surround the stator.

In addition, Japanese Published Unexamined Patent Application No. 05-304755 (Document 2) discloses a configuration for positioning a head of a disc drive instead of a yarn traverse device, in which, in the third embodiment, two inner and outer fan-shaped holes (corresponding to air gaps) are formed in yokes supporting a plurality of permanent magnets, a coil is formed so as to turn its center axis toward a tangent, and the magnets and yokes apply a pair of electromagnetic forces F-F (that is, a couple) with magnitudes equal to each other in the directions parallel to each other and opposite each other to the coil, whereby a motor generates a pure torque to rotate the arm.

On the other hand, in the traverse device of Japanese Translation of International Application (Kohyo) No. 2002-532365 (Document 3), different from the document 1 and document 2, the coil is coiled so that its center axis intersects the pivot axis of the yarn guide. The magnets have polarities different between the left side and the right side of the center of the pivoting path of the coil, and the winding legs of the coil pass through the left side and right side of the pivoting path. Thereby, moments to be applied to the winding legs (coil sides) on the left side and right side can be made equal in sign (direction) to each other.

However, the document 1 only discloses that the generation source of the magnetic fields crossing the current flowing in the coil is a stator comprising the permanent magnets, and the north or south pole of the permanent magnets is continuously disposed in the driving direction, and the document 1 does not describe detailed magnetic flux paths of the magnetic fields at all. In other words, there is room for improvement of magnetic flux density to be applied to the coil.

In the driving configuration using the couple F-F as described in the document 2, to secure a sufficient torque to pivot the arm, it is necessary to space a certain distance between the pair of coil sides to which electromagnetic forces are applied. This means that a coil side (coil side with no contribution to the torque) connecting the coil sides must be lengthened, and this results in an increase in weight of the arm including the coil and an increase in inertia.

Herein, in the technical field of the traverse device, (different from the field of disc drive head positioning) the demand for continuously repeating reciprocative reversing at a high speed has increased according to the recent tendency of yarn higher-speed winding. As described in the paragraph 0027 of the document 3 that the shortening of the dwell time (that is, quick reversing) at the endpoint of the reciprocal movement width of the yarn guide causes evenness of density of the cross-wound bobbin, it is an important issue to minimize the inertia against the reversing in order to improve the quality of a package.

In another respect, in the driving configuration of the document 2, the drive torque of the arm is obtained from the difference between the torque generated from an electromagnetic force F to be applied to a coil side of the electrical coil near the rotative movement axis of the arm and a torque generated from an electromagnetic force F to be applied to a coil side far from the rotative movement axis, so that it is difficult to expect a great drive torque.

Herein, in addition to minimizing the inertia as described above, maximizing of the drive torque for pivoting the arm is also an important issue for the same reason. Therefore, from this viewpoint, the configuration of the document 2 cannot be regarded as rational.

On the other hand, the configuration of the document 3 is superior than the document 1 and document 2 in the point that a great torque can be obtained by generating electromagnetic forces in the same direction in the pair of left and right coil sides, however, the pair of left and right coil sides must be always positioned in the respective divided left and right spaces at any pivoting position, so that, as a result, the coil side connecting the left and right coil sides (coil side with no contribution to the torque) must be lengthened, resulting in an increase in inertia.

The coil side connecting the left and right is long as described above, so that the space required for pivoting also increases, whereby there is room for improvement in compactness of the driving part of the yarn guide.

Document US 5 424 591 is related to a voice coil motor including an E-shaped yoke having a center yoke portion and side yoke portions. The voice coil motor is constituted by a plurality of thin plates having the same configuration and being stacked together. The voice coil motor further includes a counter yoke member, which is secured to an open end of the yoke. The voice coil motor further comprises permanent magnets and a hollow, cylindrical movable coil.

Document US 5 698 911 is related to an actuator, suited for locating the head of a disc drive. The actuator cooperates with a voice coil motor and includes a central yoke, upper and lower yokes aligned above and below the central yoke, and side yokes. A coil is movable over the central yoke, and the voice coil motor further includes magnets, which are supported from the upper and lower yokes and aligned with the stroke width of the coil.

Document JP 61 142 955 A is related to a voice coil motor. Coil conductors are wound up to have a hollow section in the circumferential direction and to form voice coils. The voice coils are fitted on a rotary shaft and a center yoke is inserted through the hollow section. Magnets are arranged on the outer periphery of the voice coils, confronting each other.

Document EP 0 668 653 A1 is related to a magnetic structure in a disk unit. The magnetic circuit includes a main yoke, which is manufactured by stacking a plurality of rolled steel plates and connecting them together by caulking. The magnetic circuit further includes an inner magnet, an outer magnet, and a side yoke, all of which are mounted on the main yoke.

Document JP 61 121 763 A is related to an electromagnetic drive device. The electromagnetic drive device comprises an arcuate center yoke, which is secured to a sector yoke made of an arcuate outside yoke, an arcuate inside yoke and end yokes. A movable coil is provided on the arcuate center yoke, and permanent magnets are secured to the arcuate outside yoke and the arcuate inside yoke.

Document US 5 113 099 is related to an actuator support structure, which includes a centerpole member having a first opening or void disposed at a middle region. Additional openings are disposed in the centerpole member along opposite sides of the first opening.

The anonymously disclosed article titled "Balanced and Coupled Dual Voice Coil Motor Design" in Research Disclosure, Mason Publications, Hampshire, GB, vol. 308, no. 92, is related to a type of voice coil motor, wherein two identical coils are located at opposite sides of the pivot. Two pairs of magnets are arranged to generate magnetic fields in opposite directions, one toward a center iron pole and the other one away from it.

It is a problem of the invention to provide a compact yarn traverse device.

The problem to be solved by the invention is as described above, and means for solving the problem and an effect thereof are explained next.

Namely, to traverse a yarn on a takeup bobbin that winds a yarn, a yarn traverse device is provided with two arm driving part that rotatively reciprocate an arm with a yarn guide, and each of the arm driving parts includes an electrical coil provided on the arm, two yokes that are formed into arc shapes with respect to the center of rotative movement of the arm and disposed apart from each other in a radial direction of the arcs, and an air gap that is sandwiched between the two yokes and has magnetic fields formed inside, and a part of the electrical coil is inserted in the air gap. The respective two yokes are provided with magnets, a central yoke that divides the air gap into two rows in the radial direction is provided, and in the respective two-row air gaps, magnetic fields opposed to each other in the radial direction are formed by the magnets, and a part of the electrical coil is inserted in the respective two-row air gaps so as to surround the central yoke.

With the configuration described above, electromagnetic forces turned in the same direction are generated at the portions of the electrical coil inserted in the magnetic fields, so that in comparison with the configuration of the arm driving part (document 2) in which the arm is oscillated by a couple generated by the pair of electromagnetic forces with the same magnitude in parallel to each other and opposite each other, the portion of the electrical coil which does not contribute to the drive torque for rotatively moving the arm can be shortened, whereby the electrical coil can be made lightweight and compact.

In addition, the magnets for generating the magnetic fields are disposed on the outer circumferential side of the electrical coil, and this also allows the portion of the electrical coil which does not contribute to the drive torque to be shortened.

Furthermore, the drive torque of the arm is obtained by a total torque obtained by superposing a torque generated from an electromagnetic force F to be applied to a coil side near the rotative movement axis of the arm and a torque generated from an electromagnetic force F to be applied to a coil side positioned far from the rotative movement axis, so that a drive torque much greater than in the configuration of the document 2 can be obtained.

In addition, by the central yoke and the magnets and the yokes disposed via the air gap on both sides of the central yoke, magnetic flux paths of magnetic fields are formed without dispersion so as to generate the strong magnetic fields inside the air gap. In other words, higher magnetic flux densities of the magnetic fields are realized by the central yoke and the two yokes disposed on both sides of the central yoke.

Thereby, the inertia of the arm is reduced and strong magnetic fields are applied to the electrical coil, so that the starting acceleration when reversing the arm can be improved. Thereby, the yarn dwell time at the end of the takeup bobbin can be made close to the dwell time in other ranges, so that local wind-thickening at the ends of the winding package and uneven density of the winding package can be restrained.

The center axis of the electrical coil is set along the longitudinal direction of the central yoke, and the drive torque is generated in the electrical coil in the respective air gaps formed in two rows in the radial direction, so that in comparison with the configuration of the document 3, even when the magnitudes of the generated drive torque are the same, the portion that does not contribute to the drive torque can be shortened, and the arm driving part can be made more compact.

It is preferable that the two yokes and the central yoke are connected to each other.

With this configuration, a magnetic circuit including magnetic lines capable of looping formed inside the two-row air gaps is formed, so that the magnetic flux densities in the two air gaps can be improved. Therefore, the starting acceleration when reversing the arm can be improved.

It is preferable that the central yoke is covered with a material with relative magnetic permeability lower than that of the material of the central yoke.

With this configuration, the coil inductance of the electrical coil is lowered, so that a back electromotive force that obstructs a change in a current flowing in the electrical coil can be restrained. Therefore, the current can be suddenly changed, so that the starting acceleration when reversing the arm can be improved.

The material covering the central yoke is preferably copper or aluminum.

With this configuration, the coil inductance of the electrical coil can be easily lowered at a low cost by using an inexpensive material that is easily processed as the material with low relative magnetic permeability.

The two said arm driving parts are provided in a circumferential direction with respect to the center of rotative movement of the arm.

With the above-described configuration, the drive torque for rotatively moving the arm can be improved only by adding the arm driving part, so that the starting acceleration when reversing the arm can be easily improved.

Or, the great drive torque required to reverse the arm can be dividedly generated by the two arm driving parts, so that the current to be flown in the electrical coil when reversing the arm can be reduced, so that heating of the electrical coil can be restrained.

In addition, the electrical coil is provided independently in the respective arm driving parts, so that the portion of the electrical coil which does not contribute to the drive torque can be shortened, compared with Document 3. Therefore, adding of the arm driving part does not involve an increase in the weight of the arm, so that the starting acceleration when reversing the arm can be reliably improved.

The two arm driving parts are provided symmetrically about the center of rotative movement of the arm.

With this configuration, the forces to be applied from the two arm driving parts to the center of rotative movement of the arm are balanced.

Therefore, for example, the center of rotative movement is formed of a shaft and a bearing, wearing of the shaft and the bearing can be reduced.

The two arm driving parts are arranged in line in a direction along a arm longitudinal direction.

With this configuration, the yarn traverse device can be made compact to the same level as in the case where the number of arm driving parts is one.

In a configuration, not according to the invention, the two arm driving parts are arranged in line in a direction orthogonal to the arm longitudinal direction.

With this configuration, even when a space for installing the arm driving parts cannot be secured near the arm, the arm driving part can be easily added since it is disposed without interference with the arm.

Textile machinery preferably includes the yarn traverse device described above.

Thereby, textile machinery having the useful effects as described above can be provided.

Fig. 1 is a schematic front view of a winding part of an automatic winder according to a first embodiment;

Fig. 2 is a sectional view on the arrow A-A of Fig. 1;

Fig. 3 is a schematic front view of a winding part of an automatic winder according to a second embodiment;

Fig. 4 is a schematic front view of a winding part of an automatic winder according to a third embodiment; and

Fig. 5 is a schematic front view of a winding unit of an automatic winder according to an embodiment of the invention.

### First Embodiment

Hereinafter, a first embodiment of a traverse device is explained with reference to the drawings.

Herein, an example in which the invention is applied to an automatic winder is explained as an example of textile machinery.

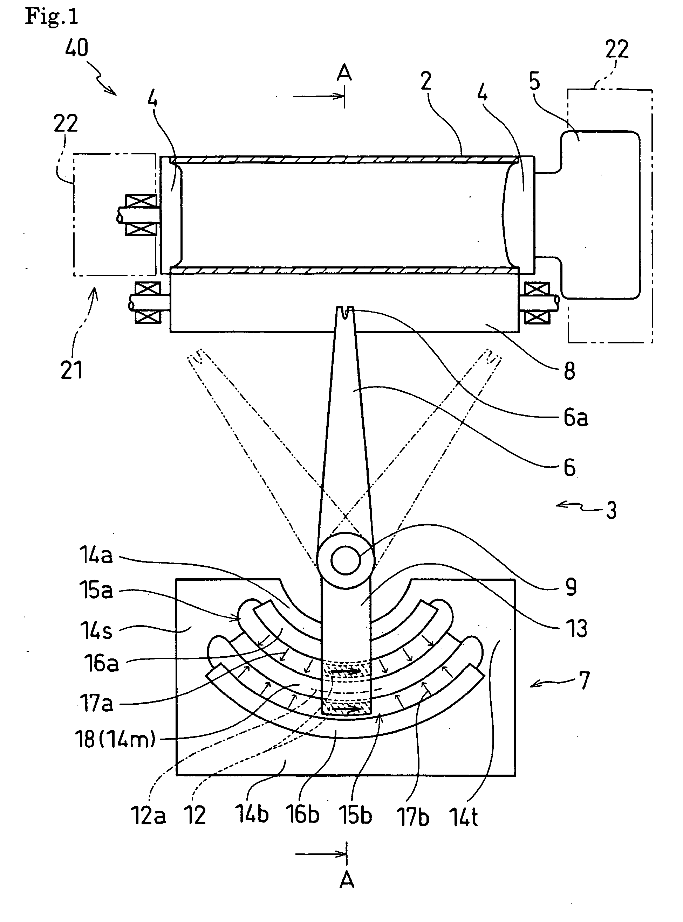

Fig. 1 is a schematic front view of a winding part of an automatic winder according to a first embodiment.

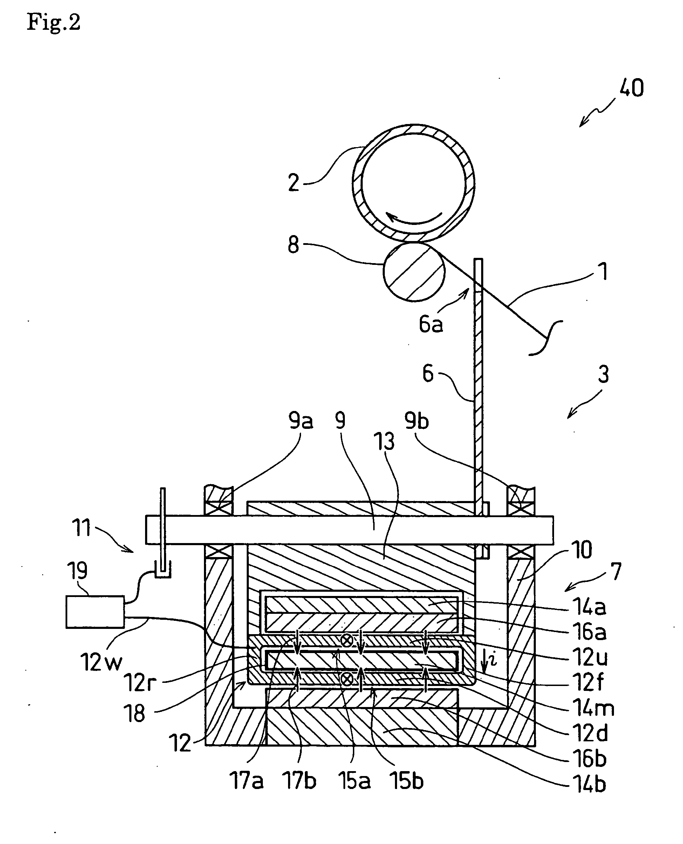

Fig. 2 is a sectional view on the arrow A-A of Fig. 1.

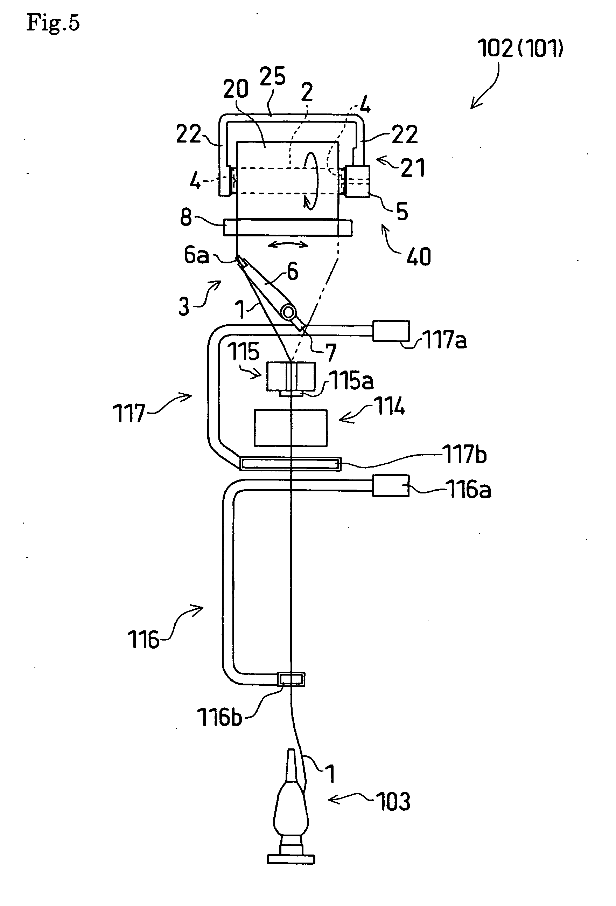

Fig. 5 is a schematic front view of a winding unit of an automatic winder according to an embodiment of the invention.

First, a yarn winding unit 102 of an automatic winder 101 is explained with reference to Fig. 5.

The yarn winding unit 102 of the automatic winder 101 shown in Fig. 5 winds a yarn 1 unwound and supplied from a yarn supplying bobbin 103 around a takeup bobbin 2 while traversing it by the traverse device 3 to form a package 20 with a predetermined length in a predetermined shape. In Fig. 5, only one yarn winding unit 102 is illustrated, however, the automatic winder 101 is formed by a number of yarn winding units 102 installed in line on an unillustrated frame.

The yarn winding unit 102 includes a cradle 21 that detachably supports the takeup bobbin 2 and a pressure-contact roller 8 that comes into contact with the circumferential surface of the package 20 formed by the takeup bobbin 2 so as to rotate in a following manner. The cradle 21 is formed so that bobbin holders 4 and 4 sandwich and hold the ends in the axial direction of the takeup bobbin 2 so as to rotatably support the bobbin. The cradle 21 is formed rotatably around a supporting shaft 25, whereby the circumferential surface of the package 20 formed on the takeup bobbin 2 can come into contact with or space from the circumferential surface of the pressure-contact roller 8. The cradle 21 includes an unillustrated spacing mechanism that forcibly lifts up the cradle 21 so as to space the package 20 from the pressure-contact roller 8 at doffing or yarn cutting.

The cradle 21 has a pair of cradle arms 22 and 22, and at the tip ends of the cradle arms 22 and 22, the bobbin holders 4 and 4 are disposed so as to face each other (refer to Fig. 1, too). At the tip end of one cradle arm 22, a package drive motor 5 for driving the bobbin holder 4 is provided. The bobbin holder 4 of the other cradle arm 22 is simply provided rotatably.

As shown in Fig. 1 and Fig. 5, a traverse device 3 is provided near the pressure-contact roller 8, and the yarn 1 is wound around the package 20 while being traversed by this traverse device 3. The configuration of this traverse device 3 is described later.

In the yarn winding unit 102 of this embodiment, the winding part 40 that winds the yarn around the takeup bobbin 2 includes at least the cradle 21 that supports the takeup bobbin 2 via the bobbin holders 4 and 4, the package drive motor 5, and the traverse device 3.

The yarn winding unit 102 is configured by disposing a yarn splicing device 114 and a yarn clearer 115 in order from the yarn supplying bobbin 103 side in a yarn running path between the yarn supplying bobbin 103 and the pressure-contact roller 8.

The yarn splicing device 114 splices a lower yarn on the yarn supplying bobbin 103 side and an upper yarn on the package 20 side together when the yarn clearer 115 detects a yarn defect and cuts the yarn or a yarn is cut during unwinding from the yarn supplying bobbin 103. The yarn clearer 115 is for detecting a thread defect such as slub, and is provided with a cutter 115a for yarn cutting when a yarn defect is detected.

Above and below the yarn splicing device 114, lower yarn holding guide means 116 for suctioning and capturing the lower yarn on the yarn supplying bobbin 103 side and guiding it to the yarn splicing device 114, and upper yarn capturing guide means 117 for suctioning and capturing the upper yarn on the package 20 side and guiding it to the yarn splicing device 114 are provided. The upper yarn capturing guide means 117 is formed into a pipe shape, provided rotatably upward and downward around a shaft 117a, and has a mouth 117b at the tip end side thereof. The lower yarn holding guide means 116 is also formed into a pipe shape, provided rotatably upward and downward around a shaft 116a, and has a suction port 116b on the tip end side. To the upper yarn capturing guide means 117 and the lower yarn holding guide means 116, an appropriate negative pressure source is connected, and air can be suctioned through the mouth 117b and the suction port 116b at the tip ends.

The traverse device 3 described above is disposed at the upstream side slightly more than the takeup bobbin 2. This traverse device 3 mainly includes an arm 6 which has a yarn guide 6a at the tip end and whose base end is rotatably pivoted, and an arm driving part 7 which rotatively reciprocates this arm 6.

The takeup bobbin 2 is urged by appropriate urging means (not shown) toward the pressure-contact roller 8 provided in parallel to the takeup bobbin 2 so that the yarn 1 to be traversed at a high speed by the traverse device 3 is stably wound around the takeup bobbin 2, and the yarn 1 is wound while being pressed by this pressure-contact roller 8 against the takeup bobbin 2.

Next, the arm 6 of the traverse device 3 is explained.

As shown in Fig. 1 and Fig. 2, at the base end of the arm 6, an arm shaft 9 perpendicular to the center of axis of the takeup bobbin 2 is provided. This arm shaft 9 is formed so as to rotatively move integrally with the arm 6, and is rotatably supported by a case 10 of the traverse device 3 via bearings 9a and 9b. At the end of the arm shaft 9, a rotary encoder 11 that can detect the rotative movement angle of the arm 6 in all ranges is provided.

An electrical coil 12 is fixed to the arm shaft 9 via a coil support 13 so that the electrical coil 12 and the arm 6 oscillate integrally. The shape of the electrical coil 12 is described later.

The yarn guide 6a provided at the tip end of the arm 6 is disposed on the side of the takeup bobbin 2 and the pressure-contact roller 8 side as seen from the arm shaft 9 as the center of rotative movement of the arm 6.

Next, the arm driving part 7 is explained.

As shown in Fig. 1, in the traverse device 3, on the opposite side of the yarn guide 6a across the arm shaft 9, two yokes 14a and 14b are provided by predetermined arc angles in arc shapes around the center of axis of the arm shaft 9. As shown in Fig. 2, the two yokes 14a and 14b have rectangular sections, and are apart from each other in the radial direction. An air gap 15 is formed so as to be sandwiched between the yoke 14a on the inner circumferential side and the yoke 14b on the outer circumferential side.

The predetermined arc angles are slightly greater than the traversing angle required for the arm 6. The yoke 14b is formed so as to form a part of the case 10 of the traverse device 3.

In the air gap 15, a central yoke 14m that is in an arc shape like the yokes 14a and 14b and has a rectangular section is provided. By this central yoke 14m, the air gap 15 is divided into two rows in the radial direction, and an air gap 15a is formed on the inner circumferential side and an air gap 15b is formed on the outer circumferential side. The air gap 15a and air gap 15b are also formed in arcs around the center of axis of the arm shaft 9, having rectangular sections.

On the inner circumferential side of the air gap 15a and the outer circumferential side of the air gap 15b, permanent magnets 16a and 16b that are also formed in arcs with rectangular sections are supported by the respective yokes 14a and 14b. The permanent magnet 16a on the inner circumferential side is magnetized in the radial direction so that its north pole faces the central yoke 14m (the permanent magnet 16b on the outer circumferential side). Likewise, the permanent magnet 16b of the outer circumferential side is magnetized in the radial direction so that its north pole faces the central yoke 14m (permanent magnet 16a on the inner circumferential side).

Thereby, in the air gap 15a on the inner circumferential side, magnetic lines 17a extending radially from the arm shaft 9 side are formed, and in the air gap 15b on the outer circumferential side, magnetic lines 17b extending toward the arm shaft 9 are formed. In other words, in the respective two-row air gaps 15a and 15b, magnetic fields (magnetic lines 17a and 17b) opposite each other in the radial direction are formed by the permanent magnets 16a and 16b.

In the first embodiment, the permanent magnet 16a and the permanent magnet 16b are magnetized so that both of their north poles face the central yoke 14m, however, without limiting to this, it is also possible that they are magnetized so that their south poles face the central yoke 14m. In this case, magnetic fields opposite each other can also be formed in the radial direction in the two-row air gaps 15a and 15b.

Herein, the central yoke 14m, the air gaps 15a and 15b, and the permanent magnets 16a and 16b are formed into thin arc plate shapes centered on the center of axis of the arm shaft 9 as shown in Fig. 2.

In addition, as shown in Fig. 1, the ends of the yokes 14a and 14b and the end of the central yoke 14m are connected to each other by yokes 14s and 14t, and the magnetic lines formed in the air gaps 15a and 15b form a magnetic circuit capable of looping. Thereby, the magnetic flux densities in the air gaps 15a and 15b are improved. Therefore, even when a current at the same level is flown to the electrical coil 12 described later, a stronger electromagnetic force can be generated than in the case where no magnetic circuit is formed, so that the starting acceleration when reversing the arm 6 can be improved.

The yokes 14s and 14t are fixed to the case 10 of the traverse device 3.

As shown in Fig. 2, the electrical coil 12 fixed to the arm shaft 9 has a lead wire wound in a roughly rectangular shape, and is formed so as to surround the central yoke 14m that is in a thin plate shape with a rectangular section. In addition, as shown in Fig. 1, the electrical coil 12 is disposed so that the central axis 12a thereof is always along the longitudinal direction of the central yoke 14m when the arm 6 rotatively reciprocates. Electrical coil sides 12u and 12d that are a part of the electrical coil 12 and are two sides facing each other in parallel to the arm shaft 9 are inserted in the air gap 15a and the air gap 15b, respectively.

To this electrical coil 12, as shown in Fig. 2, an appropriate current is supplied via a flexible power supplying line 12w, and the rotative reciprocation range and rotative movement speed of the arm 6 are controlled by this voltage.

Herein, preferable magnetic fields are formed in the air gaps 15a and 15b as described above, so that when a current flows into the electrical coil 12, electromagnetic forces are generated in the electrical coil sides 12u and 12d due to the Fleming's law.

On the other hand, in the spaces which the remaining two electrical coil sides 12f and 12r as a part of the electrical coil 12 connecting the electrical coil sides 12u and 12d to each other pass through, only weak magnetic fields are formed, so that electromagnetic forces are hardly generated.

Thus, in the electrical coil 12 of this embodiment, a pair of sides (electrical coil sides 12u and 12d) to generate an electromagnetic force and a pair of sides (electrical coil sides 12f and 12r) that hardly generate an electromagnetic force and only increase the inertia of the arm 6 are included.

Therefore, to reduce the inertia of the arm 6 that rotatively moves so as to continuously reciprocatively reverse at a high seed, the electrical coil 12 of this embodiment is formed so that the lengths of the electrical coil sides 12f and 12r become as short as possible.

In detail, as described above, the magnetic line 17a and the magnetic line 17b are formed to face each other, and in the electrical coil side 12u and the electrical coil side 12d inserted in the respective magnetic lines 17a and 17b, electromagnetic forces turned in the same direction are generated.

Therefore, when both magnetic lines 17a and 17b are formed in the same direction, in comparison with the case where the arm is made to oscillate by a couple generated by a pair of electromagnetic forces with the same magnitudes in parallel to each other and opposite each other, the electrical coil side 12u and the electrical coil side 12d do not need to be apart from each other, so that the lengths of the sides (electrical coil sides 12f and 12r) that hardly generate an electromagnetic force but only increase the inertia of the arm 6 can be made shorter.

In other words, in the electrical coil 12, the lengths of the portions (electrical coil sides 12f and 12r) that do not contribute to the drive torque to rotatively move the arm 6 can be significantly shortened.

Therefore, the electrical coil 12 becomes lightweight and compact in the radial direction, and according to this, the inertia of the arm 6 can be reduced, so that the starting acceleration when reversing the arm 6 can be improved.

In addition, the permanent magnets 16a and 16b that generate the magnetic lines 17a and 17b are disposed at the outer circumferential side of the electrical coil 12 instead of the inner circumferential side, so that in comparison with the configuration of the document 1, the lengths of the portions (electrical coil sides 12f and 12r) which do not contribute to the drive torque can be shortened.

The drive torque of the arm 6 is obtained as a total torque obtained by superposing a torque generated by the electromagnetic force applied to the electrical coil side 12u closer to the arm shaft 9 of the arm 6 and a torque generated by the electromagnetic force applied to the electrical coil side 12d far from the arm shaft 9 of the arm 6 in the electrical coil 12, so that the obtained drive torque is much greater than in the configuration of document 2.

By the central yoke 14m and the permanent magnets 16a and 16b and the yokes 14a and 14b disposed on both sides of the central yoke 14m across the air gaps 15a and 15b, the magnetic flux paths of the magnetic lines 17a and 17b are formed without dispersion so as to generate strong magnetic fields in the air gaps 15a and 15b. In other words, the magnetic flux densities of the magnetic lines 17a and 17b are made higher by the central yoke 14m and the two yokes 14a and 14b disposed on both sides of the central yoke.

As described above, the inertia of the arm 6 is reduced, and the strong magnetic fields (magnetic lines 17a and 17b) are applied to the electrical coil 12, so that the starting acceleration when reversing the arm 6 can be improved.

With the configuration described above, the arm driving part 7 including the electrical coil 12 can be made compact in the radial direction.

In addition, the central axis 12a of the electrical coil 12 is along the tangent (longitudinal direction) of the central yoke 14, and the electrical coil side 12u and the electrical coil side 12d for generating the drive torque are arranged in line in two rows in the radial direction, so that in comparison with the configuration of the document 3, even when the generated drive torque is at the same level, the lengths of the portions (electrical coil sides 12f and 12r) of the electrical coil 12 which do not contribute to the drive torque to rotatively move the arm 6 can be made shorter, and the width of the arm driving part 7 (the left and right direction of the sheet of Fig. 1) can be made more compact.

The yokes for forming the magnetic circuit are generally made of a metal with high relative magnetic permeability such as ferrite. On the other hand, in this embodiment, the central yoke 14m that penetrates the electrical coil 12 and forms a magnetic circuit is covered with a copper sleeve 18 made of a material with relative magnetic permeability lower than that of the central yoke 14m across the entire region in the arc direction.

Thereby, the coil inductance of the electrical coil 12 is lowered, so that a back electromotive force that obstructs a change in current flowing into the electrical coil 12 can be restrained. Therefore, when reversing the arm 6, the current flowing in the electrical coil 12 can be suddenly changed, so that the starting acceleration can be improved.

In addition, as the material with lower relative magnetic permeability, aluminum can also be used. These copper and aluminum are inexpensive and easily processed, so that the coil inductance of the electrical coil 12 can be easily lowered at a low cost.

The traverse device 3 of this embodiment has a control part 19 that can control the rotative reciprocation of the arm 6 by supplying a current to the electrical coil 12.

The input side of this control part 19 is connected to the rotary encoder 11 by an appropriate signal line so as to receive a signal of a rotative movement angle of the arm 6 detected by the rotary encoder 11. The output side of the control part 19 is connected to the electrical coil 12 of the arm driving part 7 by the flexible power supplying line 12w so as to supply an appropriate current to the electrical coil 12.

Thus, the control part 19 can supply an appropriate current to the electrical coil 12 by means of feed-back control based on the results of receiving, so that the angle and speed of rotative movement of the rotative reciprocation of the arm 6 can be freely controlled.

Next, operations of the arm driving part 7 of the traverse device 3 are explained.

First, as shown in Fig. 2, the case where a current (symbol i) to be supplied to the electrical coil 12 from the control part 19 flows clockwise in the electrical coil 12 is explained.

In the air gap 15a, a magnetic field (magnetic line 17a) turned downward in Fig. 2 is formed, so that due to the Fleming's law, an electromagnetic force perpendicular to the sheet of the drawing is generated in the electrical coil side 12u. In Fig. 2, the vector perpendicular to the sheet is shown by a circled cross.

In the air gap 15b, an upward magnetic field(magnetic line 17b) is formed, so that an electromagnetic force in a direction perpendicular to the sheet is also generated in the electrical coil side 12d.

Thus, in the electrical coil side 12u and the electrical coil side 12d, a pair of electromagnetic forces that have almost the same magnitude and are in parallel to each other and are applied in the same direction are generated. As shown in Fig. 1, these electromagnetic forces are generated apart from the arm shaft 9, whereby a drive torque counterclockwise around the arm shaft 9 is generated for the arm 6. Thereby, the arm 6 is rotatively moved counterclockwise around the arm shaft 9.

As described above, in the arm driving part 7 of the embodiment, to generate a drive torque to rotatively move the arm 6, it is not necessary to intentionally separate the electrical coil side 12u and the electrical coil side 12d, and the central yoke 14m forming an electromagnetic circuit can be made thin.

Therefore, the lengths of the electrical coil side 12f and the electrical coil side 12r that do not contribute to the drive torque at all but only increase the inertia of the arm 6 can be significantly shortened, so that the electrical coil 12 can be made lightweight and compact. Accordingly, the inertia of the arm 6 can be reduced, so that the starting acceleration when reversing the arm 6 can be improved.

When the current supplied from the control part 19 flows counterclockwise in Fig. 2 in the electrical coil 12, the electromagnetic forces are applied in reverse to the above-described electromagnetic forces.

As described above, in the arm driving part 7 relating to the embodiment, first, the portions (electrical coil sides 12f and 12r) that do not contribute to the drive torque of the arm 6 in the electrical coil 12 can be shortened and the electrical coil 12 can be made lightweight and compact, so that the inertia of the arm 6 can be reduced.

Second, in the arm driving part 7, a preferable magnetic circuit comprising the yokes 14a, 14b, 14s, and 14t and the central yoke 14m is formed, so that strong magnetic lines 17a and 17b can be formed in the portions (electrical coil sides 12u and 12d) of the electrical coil 12 which contribute to the drive torque of the arm 6.

Third, the central yoke 14m penetrating through the center of the electrical coil 12 is covered with a material with relative magnetic permeability lower than that of the central yoke 14m, so that the coil inductance of the electrical coil 12 is lowered. Thereby, the current flowing in the electrical coil 12 can be suddenly changed.

By these effects, the starting acceleration when reversing the arm 6 (traverse turning) can be improved. Therefore, even when the arm 6 rotatively moves so as to continuously repeat reciprocative reversing at a high speed, the dwell time of the yarn 1 at the end of the takeup bobbin 2 can be made close to the dwell time in other ranges, so that local wind-thickening at the ends of the winding package or uneven density of the winding package can be prevented.

### Second Embodiment

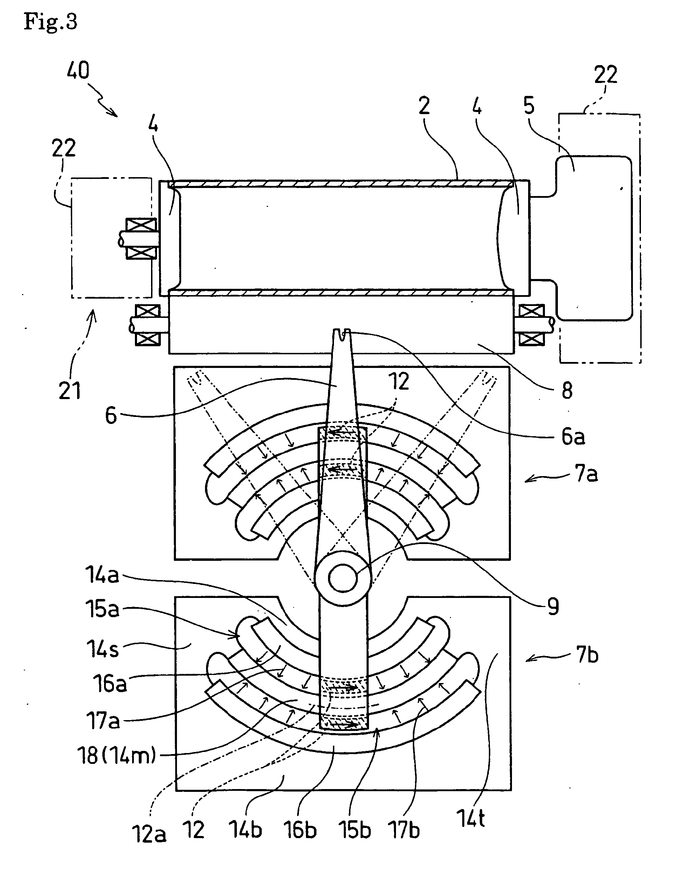

Next, a second embodiment of the traverse device according to the invention is explained with reference to Fig. 3. In Fig. 3, components corresponding to those in the first embodiment are attached with the same symbols, and differences between the second embodiment and the first embodiment are mainly explained herein.

Fig. 3 is a schematic front view of a winding part of an automatic winder according to the second embodiment.

In the second embodiment, the number of the provided arm driving parts 7 whose configuration was explained in the first embodiment is not single but two in the circumferential direction with respect to the center of axis of the arm shaft 9.

The two arm driving parts 7a and 7b are installed in line along the longitudinal direction of the arm 6, symmetrically about the center of axis of the arm shaft 9 that is the center of rotative movement of the arm 6.

Thus, the traverse device of this embodiment can increase the drive torque to rotatively move the arm 6 only by adding the arm driving part to the first embodiment, so that the starting acceleration when reversing the arm 6 can be easily improved.

Or, the great drive torque necessary to reverse the arm 6 can be dividedly generated by the two arm driving parts 7a and 7b, so that the current to be flown into the electrical coil 12 when reversing the arm 6 can be reduced, whereby heating of the electrical coil 12 can be restrained.

In addition, the electrical coil 12 is independently provided for the respective arm driving parts 7a and 7b, so that the lengths of the portions of the electrical coil 12 which do not contribute to the drive torque of the arm 6 can be made shorter than in the document 3. Therefore, the adding of the arm driving part does not involve an increase in weight of the arm 6, so that the starting acceleration when reversing the arm 6 can be securely improved.

In addition, the arm driving part 7a and the arm driving part 7b are provided symmetrically about the center of axis of the arm shaft 9, so that the forces to be applied from the arm driving parts 7a and 7b to the arm shaft 9 are balanced.

Therefore, in comparison with the case where one arm driving part is provided (for example, as in the first embodiment), wearing of the portions (for example, the bearings 9a and 9b) for rotatably supporting the arm shaft 9 can be reduced.

Furthermore, these two arm driving parts 7a and 7b are arranged in line along the longitudinal direction of the arm 6, so that the traverse device 3 can be made compact in the width direction (the left and right direction of the sheet of Fig. 3) to the same level as in the case where one arm driving part 7 is provided.

### Third Embodiment

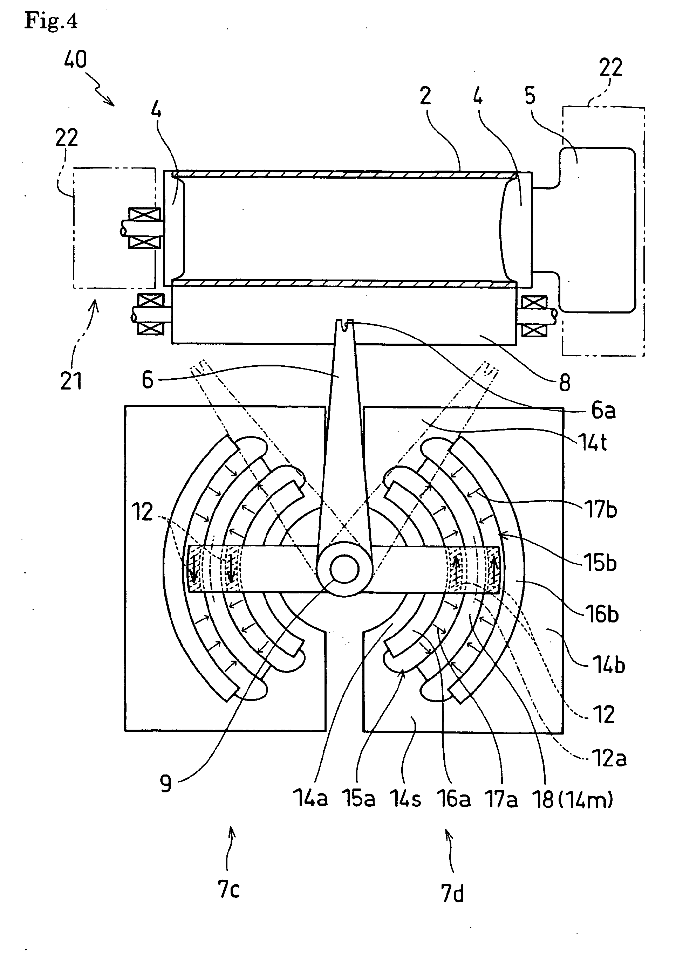

Next, a third embodiment of the traverse device is explained with reference to Fig. 4. In Fig. 4, components corresponding to those in the second embodiment are attached with the same symbols, and differences between the third embodiment and the second embodiment are mainly explained herein.

Fig. 4 is a schematic front view of a winding part of an automatic winder according to the third embodiment.

In the third embodiment, the two arm driving parts 7a and 7b whose arrangement was explained in the second embodiment are arranged in line in a direction orthogonal to the longitudinal direction of the arm 6 instead of in the longitudinal direction.

Thereby, even when a space for installing the arm driving part 7 cannot be secured near the arm 6, the arm driving part 7 to be added is disposed without interference with the arm 6, so that the arm driving part 7 can be easily added.

In the second embodiment and the third embodiment, two arm driving parts are provided in the traverse device 3, and it is also possible that these two arm driving parts are operated simultaneously, or one is operated only when reversing the arm 6 so as to ancillary increase the starting acceleration when reversing the arm 6.

The yarn traverse devices shown according to the first through third embodiments described above are especially suitable for textile machineries, and by providing the traverse device showing such useful effects, textile machinery for producing high quality yarn packages can be provided.

The invention is described above, however, it should be understood that other various embodiments without deviating from the scope of the invention as claimed can be carried out. Furthermore, in the embodiments, actions and effects of the configuration of the invention are explained, however, these actions and effects are one example, and they are not intended to limit the invention.

In the first through third embodiments, permanent magnets are used for generating magnetic fields, however, the invention is not limited to this, and electromagnets can be provided instead. By using strong magnets such as neodymium magnets, the starting acceleration when reversing the arm 6 can be further improved.

## Claims

1. yarn traverse device (3) including two arm driving parts (7a,7b) that rotatively reciprocate an arm (6) having a yarn guide (6a) for traversing the yarn (1) on a takeup bobbin (2) for winding the yarn (1), wherein
the arm driving parts (7a,7b) being provided in a circumferential direction with respect to the center of rotative movement of the arm (6), wherein each of the two arm driving parts (7a, 7b) includes:
an electrical coil (12) provided on the arm (6);
two yokes (14a, 14b) that are formed into arcs with respect to a center of rotative movement of the arm (6) and disposed apart from each other in a radial direction of the arcs, and
an air gap (15) that is sandwiched by the two yokes (14a, 14b) and includes magnetic fields formed inside, where a part of the electrical coil (12) is inserted in the air gap (15), and
magnets (16a, 16b) are provided on the respective two yokes (14a, 14b),
a central yoke (14m) is provided that divides the air gap (15) into two rows in the radial direction, wherein
in the respective two-row air gaps (15a, 15b), magnetic fields (17a, 17b) opposed to each other in the radial direction are formed by the magnets (17a, 17b), and a part of the electrical coil (12) is inserted in the respective two-row air gaps (15a, 15b) so as to surround the central yoke (14m) and the two arm driving parts (7a, 7b) are arranged in line in a longitudinal direction of the arm (6),
wherein the two arm driving parts (7a, 7b) are provided symmetrically about the center of rotative movement of the arm (6).

2. The yarn traverse device (3) according to claim 1, wherein the two yokes (14a, 14b) and the central yoke (14m) are connected to each other.

3. The yarn traverse device (3) according to claim 1 or 2, wherein the central yoke (14m) is covered with a material with relative magnetic permeability lower than that of a material of this central yoke (14m).

4. The yarn traverse device (3) according to claim 3, wherein the material covering the central yoke (14m) is copper or aluminum.

5. A textile machinery (101) including the yarn traverse device (3) according to any of claims 1 through 4.

## Patentansprüche

1. Faden- bzw. Garntraversiervorrichtung (3), die zwei Armantriebsteile (7a, 7b) enthält, die einen Arm (6) drehungsmäßig hin und her bewegen, der eine Faden- bzw. Garnführung (6a) zum Traversieren des Fadens bzw. Garns (1) auf eine Auflaufrolle (2) zum Aufwickeln des Garns (1) aufweist, wobei
die Armantriebsteile (7a, 7b) in einer Umfangsrichtung bezüglich dem Zentrum der Drehbewegung des Arms (6) vorgesehen sind, wobei jeder der beiden Armantriebsteile (7a, 7b) enthält:
eine elektrische Spule (12), die an dem Arm (6) vorgesehen ist;
zwei Jochs (14a, 14b), die bezüglich einem Zentrum der Drehbewegung des Arms (6) zu Bögen gebildet und von einander entfernt in einer radialen Richtung der Bögen angeordnet sind, und
einen Luftzwischenraum (15), der zwischen den beiden Jochs (14a, 14b) angeordnet ist und Magnetfelder enthält, die im Inneren gebildet sind, wo ein Teil der elektrischen Spule (12) in den Luftzwischenraum (15) eingesetzt ist, und
Magnete (16a, 16b) an den jeweiligen zwei Jochs (14a, 14b) vorgesehen sind,
ein zentrales Joch (14m) vorgesehen ist, das den Luftzwischenraum (15) in zwei Reihen in der radialen Richtung teilt, wobei
in den jeweiligen zweireihigen Luftzwischenräumen (15a, 15b) Magnetfelder (17a, 17b), die einander in der radialen Richtung gegenüberliegen, durch die Magneten (17a, 17b) gebildet sind und ein Teil der elektrischen Spule (12) in die jeweiligen zweireihigen Luftzwischenräume (15a, 15b) eingesetzt ist, um das zentrale Joch (14m) zu umgeben, und die beiden Armantriebsteile (7a, 7b) in Linie in einer Längsrichtung des Arms (6) angeordnet sind,
wobei die beiden Armantriebsteile (7a, 7b) symmetrisch um das Zentrum der Drehbewegung des Arms (6) herum vorgesehen sind.

2. Garntraversiervorrichtung (3) nach Anspruch 1, wobei die beiden Jochs (14a, 14b) und das zentrale Joch (14m) miteinander verbunden sind.

3. Garntraversiervorrichtung (3) nach Anspruch 1 oder 2, wobei das zentrale Joch (14m) mit einem Material mit einer relativen magnetischen Permeabilität bedeckt ist, die geringer ist als diejenige eines Materials dieses zentrales Jochs (14m).

4. Garntraversiervorrichtung (3) nach Anspruch 3, wobei das Material, welches das zentrale Joch (14m) bedeckt, Kupfer oder Aluminium ist.

5. Textilmaschine (101), welche die Garntraversiervorrichtung (3) nach einem der Ansprüche 1 bis 4 enthält.

## Revendications

1. Dispositif de va-et-vient de fil (3) incluant deux parties de commande de bras (7a, 7b) qui alternent en rotation un bras (6) ayant un guidage de fil (6a) pour le va-et-vient du fil (1) sur un bobine cueilleuse (2) pour enrouler le fil (1), dans lequel
les parties de commande de bras (7a, 7b) étant prévues dans une direction circonférentielle par rapport au centre du mouvement rotatif du bras (6), dans lequel chacune des deux parties de commande de bras (7a, 7b) inclut:
une bobine électrique (12) prévue sur le bras (6);
deux supports (14a, 14b) qui sont formés en arcs par rapport à un centre du mouvement rotatif du bras (6) et disposés à l'écart l'un de l'autre dans une direction radiale des arcs, et
une fente d'air (15) qui est placée en sandwich par les deux supports (14a, 14b) et qui inclue des champs magnétiques formés à l'intérieur, une part de la bobine électrique (12) étant insérée dans la fente d'air (15), et
des aimants (16a, 16b) sont prévus sur les deux supports respectifs (14a, 14b),
un support central (14m) est prévu, lequel divise la fente d'air (15) en deux rangées en direction radiale, dans lequel
dans les deux fentes de rangée d'air respectives (15a, 15b), des champs magnétiques (17a, 17b) opposés l'un à l'autre dans la direction radiale sont formés par les aimants (17a, 17b), et une partie de la bobine électrique (12) est insérée dans les deux fentes de rangée d'air respectives (15a, 15b) de manière à entourer le support central (14m) et les deux parties de commande de bras (7a, 7b) sont agencées en ligne dans une direction longitudinale du bras (6),
dans lequel les deux parties de commande de bras (7a, 7b) sont prévues symétriquement autour du centre du mouvement rotatif du bras (6).

2. Dispositif de va-et-vient de fil (3) selon la revendication 1, dans lequel les deux supports (14a, 14b) et le support central (14m) sont reliés les uns aux autres.

3. Dispositif de va-et-vient de fil (3) selon l'une des revendications 1 ou 2, dans lequel le support central (14m) est couvert par un matériau avec une perméabilité magnétique relative inférieure à celle d'un matériau de ce support central (14m).

4. Dispositif de va-et-vient de fil (3) selon la revendication 3, dans lequel le matériau couvrant le support central (14m) est du cuivre ou de l'aluminium.

5. Machinerie textile (101) incluant le dispositif de va-et-vient de fil (3) selon l'une quelconque des revendications 1 à 4.
